# EUROPÄISCHE PATENTSCHRIFT

(11) **EP 2 572 539 B1**
(45) Veröffentlichungstag und Bekanntmachung des Hinweises auf die Patenterteilung: **02.04.2014**
(21) Anmeldenummer: 11727910.9
(22) Anmeldetag: 17.05.2011
(51) Int. Cl.: H04W 52/02

(54) **ELEKTRONISCHES GERÄT MIT BETRIEBSARTENUMSCHALTEINRICHTUNG**
ELECTRONIC DEVICE COMPRISING AN OPERATING MODE SWITCHING UNIT
APPAREIL ÉLECTRIQUE DOTÉ D'UN DISPOSITIF DE COMMUTATION DE MODE DE FONCTIONNEMENT

(30) Priorität: 17.05.2010 DE 102010020733
(43) Veröffentlichungstag der Anmeldung: 27.03.2013
(73) Patentinhaber: Albert-Ludwigs-Universität Freiburg, 79098 Freiburg (DE)
(72) Erfinder: GAMM, Gerd, Ulrich, 79104 Freiburg (DE); REINDL, Leonhard, Michael, 79199 Kirchzarten (DE); OSTERTAG, Thomas, 82538 Geretsried (DE); SIPPEL, Matthias, 36043 Fulda (DE); WENDT, Thomas, 79263 Simonswald (DE); UNGAN, Tolgay, 79104 Freiburg (DE)
(74) Vertreter: Huwer, Andreas
(86) Internationale Anmeldenummer: PCT/EP2011/002443
(87) Internationale Veröffentlichungsnummer: WO 2011/144320

(56) Entgegenhaltungen:
- WO-A1-2004/077761

## Beschreibung

Die Erfindung betrifff ein elektronisches Gerät mit einer elektrischen Schaltung und einer dieser zugeordneten Betriebsartenumschalteinrichtung, mittels der die Schaltung aus einem Ruhezustand in einen Arbeitszustand aufweckbar ist, in welchem die Stromaufnahme der Schaltung größer ist als im Ruhezustand, mit einem Empfänger zum Empfangen eines Funksignals, das einen Träger aufweist, der mit einem Modulationssignal amplitudenmoduliert ist, wobei der Empfänger eine UHF-Antenne hat, die über eine passive Impedanzwandlerstufe mit einem Eingang einer passiven Gleichrichterschaltung verbunden ist, wobei ein Ausgang der Gleichrichterschaltung mit einer Detektionseinrichtung für das Modulationssignal verbunden ist, und wobei die Betriebsartenumschalteinrichtung zum Aufwecken der im Ruhezustand befindlichen elektrischen Schaltung mit der Detektionseinrichtung in Steuerverbindung steht.

Ein derartiges elektronisches Gerät das als batteriebetriebener Funksensorknoten für ein drahtloses Sensor-Netzwerk ausgestaltet ist und als elektrische Schaltung einen Transceiver aufweist, ist aus Bas van der Doorn et al. "A prototype low-cost wakeup radio for the 868 MHz band", Int. J. Sensors Networks, Vol. 5, No. 1, 2009, Seiten 22-32 bekannt. Mit einem solchen elektronischen Gerät können auf einfache Weise ohne eine aufwändige Verkabelung Daten übertragen werden. Nachteilig ist dabei jedoch, dass die Batterie des Geräts nur eine begrenzte Lebensdauer aufweist. Netzwerke, bei denen im Monatsabstand die Batterien in den Geräten erneuert werden müssen, verursachen auf Dauer mehr Kosten als die einmalige Investition für die Verkabelung eines entsprechenden drahtgebundenen Netzwerks. Dies ist insbesondere dann der Fall, wenn die Geräte an Orten eingesetzt werden, die nur schwer zugänglich sind.

Um die Energieaufnahme zu reduzieren, ist die elektrische Schaltung des vorbekannten Geräts mit Hilfe einer Betriebsartenumschalteinrichtung in einen Ruhe- und in einen Arbeitszustand bringbar. Im Ruhezustand ist die Energieaufnahme gegenüber dem Arbeitszustand reduziert. Dies kann beispielsweise dadurch erreicht werden, das Teile der Schaltung im Ruhezustand abgeschaltet sind. Das sogenannte Aufwecken des Geräts erfolgt drahtlos mittels eines beispielsweise von einer Basisstation ausgesendeten Funksignals. Dieses weist einen Träger im 868 MHz-Band auf, der mit einem 125 kHz Modulationssignal OOK-amplitudenmoduliert ist. Bei der OOK-Amplitudenmodulation wird der Träger mit einer Rate von 862 Hz periodisch ein- und ausgeschaltet. Da der Träger im UHF-Band liegt, kann das Gerät über eine relativ große Entfernung aufgeweckt werden.

Zum Empfangen des Funksignals hat das Gerät einen Empfünger, der eine UHF-Antenne aufweist, die über eine passive Impedanzwandlerstufe mit einem Eingang einer passiven Gleichrichterschaltung verbunden ist. Der Ausgang der Gleichrichterschaltung ist über einen Operationsverstärker mit einem Interrupt-Eingang eines Mikrocontrollers verbunden, der als Detektionseinrichtung für das Modulationssignal bzw. das Aufwecksignal dient. Der Mikrocontroller ist mit einem Interrupt-Eingang eines Mikrocomputers verbunden, der den Transceiver steuert. Beim Detektieren des Modulationssignals wird der Mikrocomputer über den Interrupt-Eingang aufgeweckt. Das Gerät weist jedoch auch im Ruhezustand noch eine relativ hohe Stromaufnahme auf Insbesondere benötigt der Operationsverstärker, der auch im Ruhezustand ständig in Betrieb sein muss, damit das Gerät jederzeit aufgeweckt werden kann, relativ viel Energie.

Aus WO 2004/077761 A1 ist ferner ein Empfänger zum Empfangen eines Funksignals bekannt, das einen Träger aufweist, der mit einem OOK-Modulationssignal moduliert ist. Der Empfänger hat eine HF-Antenne, die über eine passive Filterstufe mit einem Eingang einer passiven Gleichrichterschaltung verbunden ist. Ein Ausgang der Gleichrichterschaltung ist mit einer Detektionseinrichtung für das Modulationssignal verbunden, in der das gleichgerichtete getaktete Trägersignal in ein Digitalsignal umgewandelt wird, welches als Gerätekennung für ein Bluetooth-Gerät dient. Wenn die auf diese Weise übermittelte Gerätekennung mit einer im Bluetooth-Gerät gespeicherten Gerätekennung übereinstimmt, wird das Bluetooth-Gerät aus einem Ruhezustand in einen Arbeitszustand umgeschaltet, um eine Bluetooth-Verbindung aufzubauen. Auch dieses Gerät weist im Ruhezustand eine relativ hohe Stromaufnahme auf

Es besteht deshalb die Aufgabe, ein Gerät der eingangs genannten Art zu schaffen, das eine geringe Stromaufnahme ermöglicht.

Diese Aufgabe wird dadurch gelöst, dass zur Anpassung der Ausgangsimpedanz der Gleichrichterschaltung an die Eingangsimpedanz der Detektionseinrichtung zwischen dem Ausgang der Gleichrichterschaltung und der Detektionseinrichtung ein für das Modulationssignal durchlässiges passives Filter angeordnet ist und dass das Filter und/oder die Filterstufe einen LC-Schwingkreis mit einem Schwingquarz und/oder einem mikroakustischen Resonator aufweist.

Dabei ist der LC-Schwingkreis derart dimensioniert, dass der Schwingquarz und/oder der mikroakustische Resonator zwischen seiner Serien- und seiner Parallelresonanzfrequenz betrieben wird, d.h. bei der Filterstufe befindet sich die Trägerfrequenz zwischen der Serien- und der Parallelresonanzfrequenz des LC-Schwingkreises und/oder bei dem Filter befindet sich die Modulationstrequenz zwischen der Serien- und der Parallelresonanzfrequenz des LC-Schwingkreises. Der Schwingquarz und/oder der mikroakustische Resonator wird als Induktivität hoher Güte verwendet. Somit transformiert die den Schwingquarz und/oder den mikroakustischen Resonator aufweisende Filterstufe die Antennenimpedanz mit hoher Güte in die Eingangsimpedanz der Gleichrichterschaltung bzw. das den Schwingquarz und/oder den mikroakustischen Resonator aufweisende passive Filter transformiert die Ausgangsimpedanz der Gleichrichterschaltung in die Eingangsimpedanz der Detektionseinrichtung. Das passive Filter ist zu diesem Zweck derart dimensioniert, dass im Frequenzbereich des Modulationssignals die Ausgangsimpedanz des über die Gleichrichterschaltung mit der UHF-Antenne verbundenen Filters näher an der Eingangsimpedanz der Detektionseinrichtung liegt als die Ausgangsimpedanz der Gleichrichterschaltung. Der Frequenzgang des Filters ist derart gewählt, dass das Filter für den Frequenzbereich des Modulationssignals durchlässig ist und dass außerhalb dieses Frequenzbereichs liegende Frequenzen abgeschwächt werden. Somit werden Rauschen und Störsignale, wie z.B. Mobilfunksignale, unterdrückt, wodurch die Stromaufnahme der Detektionseinrichtung zusätzlich reduziert wird. Bevorzugt kommt ein Schwingquarz mit einer Resonanzfrequenz von 32768 Hz zum Einsatz, der auch in Quarzuhren Verwendung findet und daher kostengünstig in großer Stückzahl verfügbar ist.

Vorteilhalft ist, wenn das Filter für ein Modulationssignal durchlässig ist, dessen Frequenz oder Frequenzbereich zwischen 10 kHz und 1,3 MHz liegt, insbesondere oberhalb von 30 kHz und bevorzugt oberhalb von 1 00 kHz. Das passive Filter ermöglicht dann kompakte Abmessungen. Da die Umschaltverluste der Detektionseinrichtung in etwa proportional zur Frequenz sind, kann die Detektionseinrichtung bei diesen relativ kleinen Frequenzen energiesparend betrieben werden. Da das Funksignal in einem höheren Frequenzbereich, nämlich im UHF-Bereich liegt, wird die niedrige Energieaufnahme der Detektionseinrichtung mit dem Vorteil einer großen Funkreichweite kombiniert. Außerdem ergeben sich für die Antenne kompakte Abmessungen.

Bei einer zweckmäßigen Ausgestaltung der Erfindung weist der LC-Schwingkreis eine Kapazität auf, die mit dem Schwingquarz und/oder dem mikroakustischen Resonator in einem Strompfad in Reihe geschaltet ist, der die UHF-Antenne mit einem Anschluss für ein konstantes Potential verbindet, wobei der Schwingquarz und/oder der mikroakustische Resonator und die Kapazität mit einem Knoten verbunden sind, der am Eingang der Gleichrichterschaltung angeschlossen ist. Dabei kann der Schwingquarz bzw. der mikroakustische Resonator die Antenne mit dem Eingang der Gleichrichterschaltung und die Kapazität den Eingang der Gleichrichterschaltung mit dem Anschluss für das konstante Potential verbinden. Es ist aber auch eine umgekehrte Anordnung möglich, bei welcher die Kapazität die Antenne mit dem Eingang der Gleichrichterschaltung und der Schwingquarz bzw. der mikroakustische Resonator den Eingang der Gleichrichterschaltung mit dem Anschluss für das konstante Potential verbindet.

Bei einer vorteilhaften Ausführungsform der Erfindung weist der LC-Schwingkreis eine Kapazität auf, die mit dem Schwingquarz und/oder dem mikroakustischen Resonator in einem Strompfad in Reihe geschaltet ist, der den Ausgang der Gleichrichterschaltung mit einem Anschluss für ein konstantes Potential verbindet, wobei der Schwingquarz und/oder der mikroakustische Resonator und die Kapazität mit einem Knoten verbunden sind, der am Eingang der Detektionseinrichtung angeschlossen ist. Dabei kann der Schwingquarz bzw. der mikroakustische Resonator den Ausgang der Gleichrichterschaltung mit dem Eingang der Detektionseinrichtung und die Kapazität den Eingang der Detektionseinrichtung mit dem Anschluss für das konstante Potential verbinden. Es ist aber auch eine umgekehrte Anordnung möglich, bei welcher die Kapazität den Ausgang der Gleichrichterschaltung mit dem Eingang der Detektionseinrichtung und der Schwingquarz bzw. der mikroakustische Resonator den Eingang der Detektionseinrichtung mit dem Anschluss für das konstante Potential verbindet.

Bei einer anderen vorteilhaften Ausführungsform der Erfindung ist der LC-Schwingkreis ein Serienschwingkreis ist, der in einem Strompfad angeordnet ist, der die UHF-Antenne mit der passiven Gleichrichterschaltung verbindet. Dabei sind der durch die Antenne gebildete Resonator und der durch den LC-Schwingkreis gebildete Resonator miteinander gekoppelt. Auch durch diese Maßnahme kann das an der Antenne anliegende Signal verlustarm mit einer relativ hohen Leistung in die Detektionseinrichtung eingekoppelt werden.

Vorteilhaft ist, wenn in dem die UHF-Antenne mit der passiven Gleichrichterschaltung verbinden Strompfad eine Schaltvorrichtung angeordnet ist, mittels welcher dieser Strompfad periodisch unterbrochen werden kann. Dadurch kann die Antennenimpedanz noch besser in die Eingangsimpedanz der Detektionseinrichtung transformiert werden.

Bei einer bevorzugten Ausgestaltung der Erfindung weist das Trägersignal ein Modulationssignal auf, das mit einem Informationssignal moduliert ist, wobei die Detektionseinrichtung eine Demodulationseinrichtung zum Demodulieren des Informationssignals hat, wobei die Detektionseinrichtung eine Korrelationseinrichtung zum Vergleichen des Informationssignals mit einer vorbestimmten, dem elektronischen Gerät zugeordneten Adresssignals aufweist, und wobei die Korrelationseinrichtung derart mit der Betriebsartenumschalteinrichtung in Steuerverbindung steht, dass die elektrische Schaltung nur bei einer Übereinstimmung des Datensignals mit dem Adresssignal aufgeweckt wird. In vorteilhafter Weise ist es dadurch möglich, in einem Netzwerk, das mehrere der erfindungsgemäßen elektronischen Gerät umfasst, gezielt ein einzelnes Gerät oder eine Gruppe von Geräten mit Hilfe des Funksignals aufzuwecken. Dabei können die übrigen Geräte des Netzwerks im Ruhezustand bleiben. Die Demodulationseinrichtung und die Korrelationseinrichtung sind bevorzugt in einen sogenannten Wakeup-Receiver integriert. Dabei ist es sogar möglich, dass ein handelsüblicher Wakeup-Receiver zum Einsatz kommt, der auch bei Funkfrequenz-Identifikationssystemen, beispielsweise bei Kraftfahrzeugen Verwendung findet. Derartige Identifikationssysteme sind auch unter der Bezeichnung "Komfortzugang" oder "keyless go" bekannt.

Vorteilhaft ist, wenn das Gerät als Funkknoten ausgestaltet ist, bei dem die elektrische Schaltung einen mit der UHF-Antenne verbundenen UHF-Transceiver aufweist. Nach dem Aufwecken des Geräts können dann von einer Basisstation oder von einem entsprechenden weiteren Gerät mit relativ hoher Datenrate im UHF-Band Informationen an das zuerst genannte Gerät gesendet und/oder von diesem empfangen werden. Dabei ist es sogar möglich, dass das Gerät nach dem Empfangen der Informationen diese wieder aussendet und an ein anderes Gerät weiterleitet.

Bei einer zweckmäßigen Ausgestaltung der Erfindung weist die elektrische Schaltung einen Mikrocomputer auf Dieser kann mit mindestens einem Sensor und/oder einem Aktor verbunden sein. Nach dem Aufwecken des elektronischen Geräts können dann mit Hilfe des Sensors erfasste Daten über das Funksignal an ein anderes Gerät und/oder eine Basisstation übermittelt werden. Ferner besteht die Möglichkeit Informationen zum Steuern des Aktors, wie zum Beispiel Ein-/Ausschaltbefehle, über das Funksignal an den Mikrocomputer zu übermitteln und den Aktor mittels eines auf dem Mikrocomputer ablaufenden Betriebsprogramms in Abhängigkeit von den Informationen zu steuern.

Bei einer bevorzugten Ausführungsform der Erfindung ist die UHF-Antenne mittels einer Schalteinrichtung wahl- oder wechselweise mit dem UHF-Transceiver und der passiven Filterstufe verbindbar, wobei die Schalteinrichtung derart mit der Detektionseinrichtung in Steuerverbindung steht, dass die UHF-Antenne im Ruhezustand der elektrischen Schaltung mit der der passiven Filterstufe und im Arbeitszustand mit dem UHF-Transceiver verbunden ist. Die UHF-Antenne ist also nur im Ruhezustand mit der passiven Filterstufe verbunden. Dadurch wird vermieden, dass von dem UHF-Transceiver an die UHF-Antenne angelegte Funksignale zu der passiven Filterstufe und somit zur Detektionseinrichtung des Geräts gelangen können. Somit wird die Energieaufnahme des Geräts zusätzlich reduziert.

Nachfolgend ist ein Ausführungsbeispiel der Erfindung anhand der Zeichnung näher erläutert. Es zeigt
- Fig.1: ein Blockschaltbild eines elektronisches Geräts, das über eine UHF-Funkstrecke mit einer Basisstation verbunden ist, und
- Fig. 2 bis 7: Schaltbilder von Empfängern zum Empfangen eines auf ein Funksignal amplitudenmodulierten Modulationssignals, die eine Gleichrichterschaltung aufweisen, die zur Anpassung ihrer Ausgangsimpedanz an die Eingangsimpedanz einer Detektionseinrichtung ein passives Filter hat,

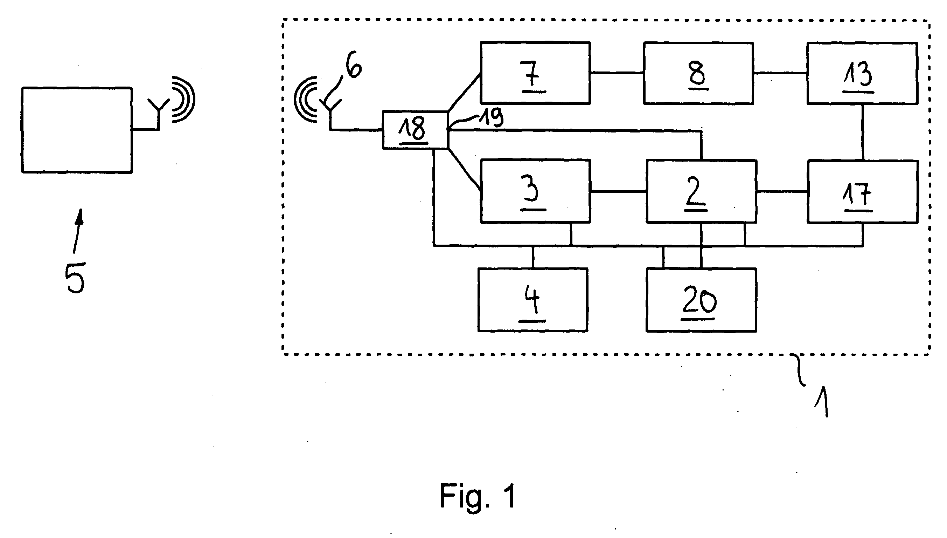

Ein als Funksensorknoten ausgestaltetes, in Fig. 1 im Ganzen mit 1 bezeichnetes elektronisches Gerät hat eine aktive elektrische Schaltung, die einen Mikrocomputer 2 und einen UHF-Transceiver 3 autweist. Zur Energieversorgung der elektrischen Schaltung ist ein Energiespeicher 4 vorgesehen, der beispielsweise eine Batterie, ein Akku oder ein Kondensator sein kann.

Der elektrischen Schaltung ist eine in der Zeichnung nicht näher dargestellte Betriebsartenumschalteinrichtung zugeordnet, mittels der die Schaltung in einen Ruhezustand und in einen Arbeitszustand bringbar ist. Um Energie zu sparen, ist die Stromaufnahme der Schaltung im Ruhezustand gegenüber dem Arbeitszustand reduziert.

Das Gerät 1 hat außerdem einen Empfänger zum Empfangen eines von einer Basisstation 5 oder einem anderen Gerät 1 ausgesendeten Funksignals. Das Funksignal weist einen UHF-Träger auf, der mit einem etwa rechteckigen Modulationssignal amplitudenmoduliert ist. Die Trägerfrequenz des Trägers beträgt etwa 868 MHz. Das Modulationssignal hat ein Trägersignal von 125 kHz, das mit einem digitalen Informationssignal OOK-moduliert ist.

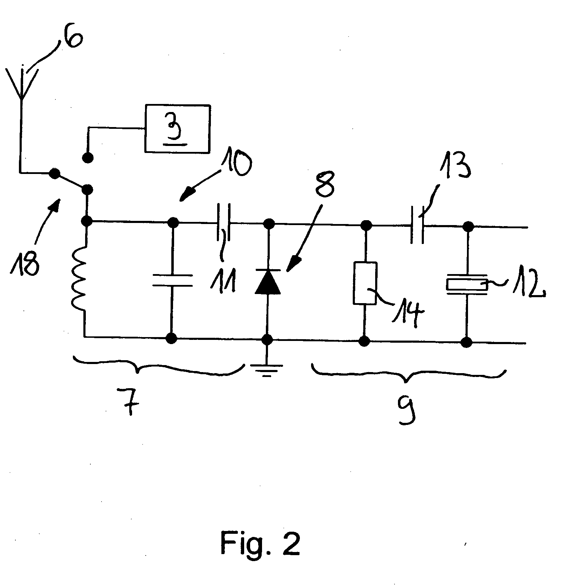

In Fig. 2 ist erkennbar, dass der Empfänger eine UHF-Antenne 6 hat, die über eine passive Filterstufe 7 mit einem Eingang einer passiven Gleichrichterschaltung 8 verbunden ist. Mit Hilfe der passiven Filterstufe 7 wird die Impedanz der UHF-Antenne 6 an den Eingangswiderstand der Gleichrichterschaltung 8 angepasst. Die Filterstufe 7 hat zu diesem Zweck eine Ausgangsimpedanz von etwa 50 Ohm. Die Ausgangsimpedanz der passiven Filterstufe 7 ist an die Eingangsimpedanz der Schottky-Dioden der Gleichrichterschaltung 8 angepasst und liegt bei kleinen Eingangsleistungen im Kiloohm-Bereich. Die Gleichrichterschaltung 8 ist mit ihrem Ausgang einem Eingang eines passiven Filters 9 verbunden.

Bei dem in Fig. 2 gezeigten Ausführungsbeispiel weist die passive Filterstufe 7 einen Parallelschwingkreis 10 auf, der mit einem ersten Anschluss mit der UHF-Antenne 6 und zusätzlich über einen Koppelkondensator 11 mit einem Eingang der Gleichrichterschaltung 8 verbunden ist. Ein zweiter Anschluss der passiven Filterstufe 7 ist mit einem Massepotentialanschluss verbunden.

Bei dem in Fig. 2 gezeigten Ausführungsbeispiel weist das passive Filter 9 einen Schwingquarz 12 auf Ein erster Anschluss der Schwingquarzes 12 ist mit dem Massepotentialanschluss und ein zweiter Anschluss über eine Kapazität 13 mit einem ersten Anschluss einer Schottky-Diode verbunden, welche die Gleichrichterschaltung 8 bildet. Ein zweiter Anschluss der Schottky-Diode liegt auf Massepotential. Parallel zu der Schottky-Diode ist eine Impedanz 14 geschaltet.

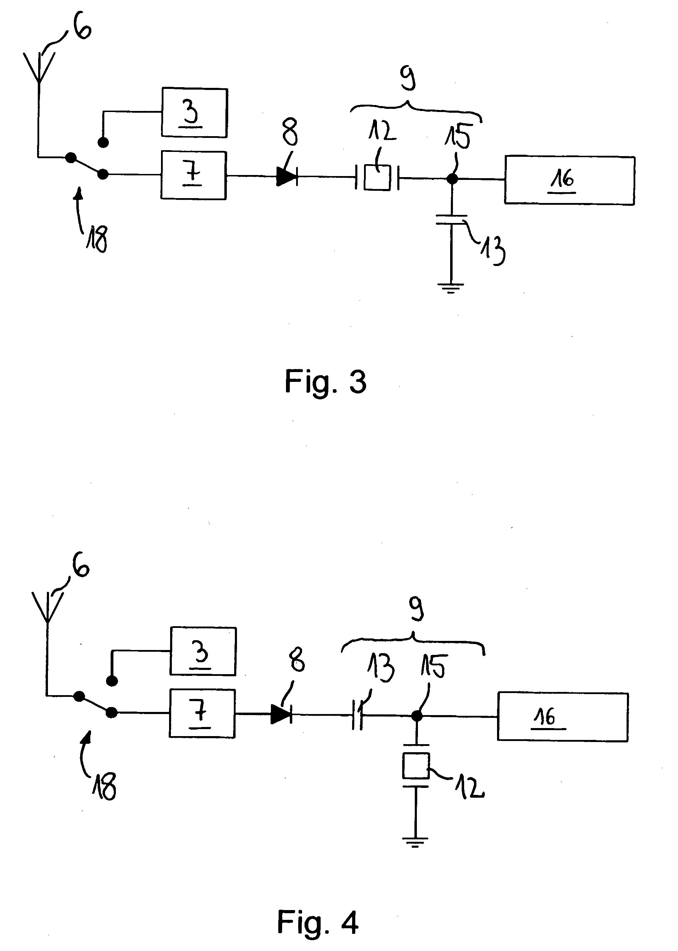

Bei den in Fig. 3 und 4 abgebildeten Ausführungsbeispielen ist der LC-Schwingkreis jeweils ein Serienschwingkreis, bei dem der Schwingquarz 12 und die Kapazität 1 3 in einem Strompfad in Reihe geschaltet sind, der den Ausgang der Gleichrichterschaltung 8 mit dem Masseanschluss verbindet. In Fig. 3 ist der Schwingquarz 12 mit einem ersten Anschluss am Ausgang der Gleichrichterschaltung 8 und mit einem zweiten Anschluss mit einem Knoten 15 verbunden. An dem Knoten 15 sind der Eingang einer Detektionseinrichtung 16 und eine erste Elektrode der Kapazität 1 3 angeschlossen. Eine zweite Elektrode der Kapazität 13 ist mit dem Masseanschluss verbunden.

In Fig. 4 ist die erste Elektrode der Kapazität 1 3 am Ausgang der Gleichrichterschaltung 8 und die zweite Elektrode am Knoten 15 angeschlossen. Der Schwingquarz 12 ist mit seinem ersten Anschluss mit dem Knoten 15 sowie dem Eingang der Detektionseinrichtung 16 und mit seinem zweiten Anschluss mit dem Masseanschluss verbunden. Bei Fig. 4 sind also der Schwingquarz 12 und der Kondensator 13 gegenüber Fig. 3 vertauscht.

Die Detektionseinrichtung 16 weist einen Aufweckempfänger vom Typ AS3932 des Herstellers austriamicrosystems auf Zum Aufwecken der im Ruhezustand befindlichen elektrischen Schaltung steht die Detektionseinrichtung 16 mit der Betriebsartenumschalteinrichtung in Steuerverbindung.

Die Detektionseinrichtung 16 weist eine in der Zeichnung nicht näher dargestellte Demodulationseinrichtung zum Demodulieren des auf das 125 kHz-Trägersignal aufmodulierten OOK-Informationssignals auf Mit Hilfe der Demodulationseinrichtung kann das Informationssignal als digitales Signal in der Detektionseinrichtung 16 bereitgestellt werden.

Die Demodulationseinrichtung ist mit einer Korrelationseinrichtung verbunden, die dazu dient, das Informationssignal mit einer vorbestimmten, dem elektronischen Gerät 1 eindeutig zugeordneten Adresssignal zu vergleichen. Das Adresssignal kann beispielsweise in einem nichtflüchtigen Datenspeicher abgelegt sein, aus dem es in die Korrelationseinrichtung geladen werden kann.

Die Korrelationseinrichtung steht derart mit der Betriebsartenumschalteinrichtung in Steuerverbindung, dass die elektrische Schaltung nur bei einer Übereinstimmung des Datensignals mit dem Adresssignal aufgeweckt wird.

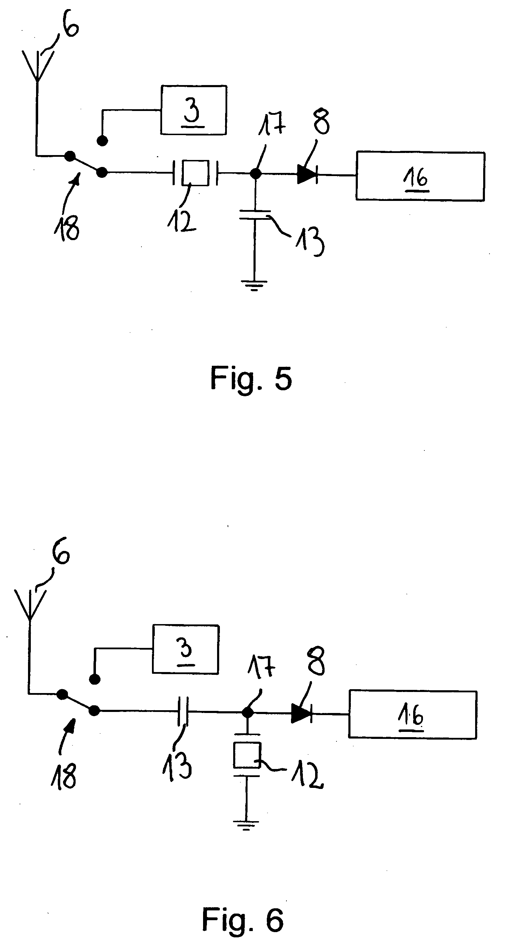

Bei den in Fig. 5 und 6 abgebildeten Ausführungsbeispielen ist der LC-Schwingkreis jeweils ein Serienschwingkreis, bei dem der Schwingquarz 12 und die Kapazität 13 in einem Strompfad in Reihe geschaltet sind, der die Antenne 6 mit dem Masseanschluss verbindet. In Fig. 5 ist der Schwingquarz 12 mit einem ersten Anschluss mit der Antenne 6 und mit einem zweiten Anschluss mit einem Knoten 17 verbunden, der am Eingang der Gleichrichterschaltung 8 angeschlossen ist. Die erste Elektrode der Kapazität 13 ist an dem Knoten 17 und die zweite Elektrode ist mit dem Masseanschluss verbunden.

In Fig. 6 ist die erste Elektrode der Kapazität 13 an der Antenne 6 und die zweite Elektrode am Knoten 17 angeschlossen. Der Schwingquarz 12 ist mit seinem ersten Anschluss mit dem Knoten 17 und dem Eingang der Gleichrichterschaltung 8 und mit seinem zweiten Anschluss mit dem Masseanschluss verbunden. Bei Fig. 6 sind also der Schwingquarz 12 und der Kondensator 1 3 gegenüber Fig. 5 vertauscht.

Bei den in Fig. 5 und 6 gezeigten Ausführungsbeispielen ist das Filter 9 so dimensioniert, dass es die Ausgangsimpedanz der Gleichrichterschaltung 8 jeweils auf einen Wert transformiert, der etwa der Eingangsimpedanz der Detektionseinrichtung 16 entspricht.

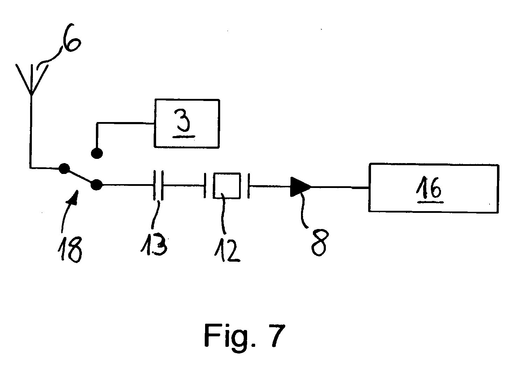

Bei dem Ausführungsbeispiel gemäß Fig. 7 ist der LC-Schwingkreis ein Serienschwingkreis, bei dem der Schwingquarz 12 und die Kapazität 13 in einem Strompfad in Reihe geschaltet sind, der die Antenne 6 mit dem Eingang der Gleichrichterschaltung 8 verbindet. Dabei ist die Kapazität 1 3 zwischen der Antenne 6 und dem Schwingquarz 12 angeordnet. Der Ausgang der Gleichrichterschaltung 8 ist in diesem Fall direkt mit dem Eingang der Detektionseinrichtung 16 verbunden. Erwähnt werden soll noch, dass anstelle des Schwingquarzes 12 auch ein Oberflächenwellen-Resonator (SAW bzw. surface acustic wafe) oder ein volumenaktustischer Resonator (BRW bzw. bulk acustic wafe) zur Anwendung kommen kann. Die vorstehend genannten Erläuterungen gelten für diese Ausführungen entsprechend.

In Fig. 1 ist erkennbar, dass die UHF-Antenne 6 mittels einer Schalteinrichtung 18 entweder mit dem UHF-Transceiver 3 oder der passiven Filterstufe 7 verbindbar ist. Die Schalteinrichtung 18 weist einen Steuereingang 19 auf, der über eine Steuerleitung und den Mikrocomputer 2 derart mit der Detektionseinrichtung 16 in Steuerverbindung, dass die UHF-Antenne 6 im Ruhezustand der elektrischen Schaltung mit der der passiven Filterstufe 7 und im Arbeitszustand mit dem UHF-Transceiver 3 verbunden ist.

Nachfolgend wird die Arbeitsweise des Geräts 1 beschrieben: Nach einem Reset des Mikrocomputers 2 fährt dieser entsprechend einem in einem Programmspeicher abgelegten Betriebsprogramm hoch. Auch der UHF-Transceiver 3, der einen Halbleiterchip vom Typ C1101 aufweist, und der Aufweckempfänger werden hochgefahren. Dabei werden Registereinstellungen vorgenommen. Mit Hilfe des Mikrocomputers 2 wird die Schalteinrichtung 18 so eingestellt, dass sie die UHF-Antenne 6 mit der Filterstufe 7 verbindet. Danach werden der UHF-Transceiver 3 und der Mikrocomputer 2 in den Ruhezustand versetzt. Die Detektionseinrichtung 16 bleibt aktiv, nimmt aber nur wenige µA Strom auf Während des Ruhemodus wird der logische Pegel am Steuereingang 18 der Schalteinrichtung 18 beibehalten.

Sobald über die UHF-Antenne 6 ein 868 MHz Funksignal empfangen wird, wird dieses über die Schalteinrichtung 18 und die passive Filterstufe 7 der Gleichrichterschaltung zugeführt. Das demodulierte Funksignal wird nach Filterung im passiven Filter 13 an den Eingang der Detektionseinrichtung angelegt. Wenn das Funksignal mit einem 125 kHz Modulationssignal amplitudenmoduliert ist, erkennt die Detektionseinrichtung 16 ein gültiges Aufwecksignal und dekodiert die Adresse. Wenn die Adresse mit der dem Gerät 1 zugeordneten Adresse übereinstimmt, sendet die Detektionseinrichtung 16 ein Aufwecksignal an den Mikrocomputer 2, woraufhin dieser in den Arbeitszustand geschaltet wird. Der Mikrocomputer 2 verbindet nun die UHF-Antenne 6 über die Schalteinrichtung 18 mit dem UHF-Transceiver 3. Außerdem übermittelt der Mikrocomputer 2 eine Bestätigungsmeldung über das Aufwecken an den UHF-Transceiver 3.

Danach findet über den UHF-Transceiver 3 eine Datenkommunikation zwischen der Basisstation 5 oder dem weiteren Gerät und einem Sensor 20 statt, der über eine drahtgebundene Kommunikationsleitung an dem UHF-Transceiver 3 angeschlossen ist. Bei der Datenkommunikation können verschiedene Modulationsarten, Pakte-Handling und/oder CRC-Check zur Anwendung kommen.

Nach erfolgtem Datenaustausch verbindet der Mikrocomputer 2 die UHF-Antenne 6 wieder über die Schalteinrichtung 18 mit der passive Filterstufe. Außerdem werden der Mikrocomputer 2 und der UHF-Transceiver 3 in den Ruhezustand geschaltet.

Das Gerät 1 kann auch ein entsprechendes anderes Gerät aufwecken, indem der UHF-Transceiver 3 einen 868 MHz Träger bereitstellt, auf den durch Amplitudenmodulation ein Modulationssignal aufmoduliert wird, das zuvor mit einem Datensignal OOK-moduliert wurde, welches mit dem Adresssignal des anderen Geräts übereinstimmt. Dabei ist die UHF-Antenne 6 über die Schalteinrichtung 18 mit dem UHF-Transceiver 3 verbunden.

Erwähnt werden soll noch, dass zwischen der UHF-Antenne und der Filterstufe 7 und/oder dem UHF-Transceiver ein hochohmiger, schmalbandiger UHF-Verstärker angeordnet sein kann.

## Patentansprüche

1. Elektronisches Gerät (1) mit einer elektrischen Schaltung und einer dieser zugeordneten Betriebsartenumschalteinrichtung, mittels der die Schaltung aus einem Ruhezustand in einen Arbeitszustand aufweckbar ist, in welchem die Stromaufnahme der Schaltung größer ist als im Ruhezustand, mit einem Empfänger zum Empfangen eines Funksignals, das einen UHF-Träger aufweist, der mit einem Modulationssignal amplitudenmoduliert ist, wobei der Empfänger eine UHF-Antenne (6) hat, die über eine passive Filterstufe (7) mit einem Eingang einer passiven Gleichrichterschaltung (8) verbunden ist, wobei ein Ausgang der Gleichrichterschaltung (8) mit einer Detektionseinrichtung (16) für das Modulationssignal verbunden ist, und wobei die Betriebsartenumschalteinrichtung zum Aufwecken der im Ruhezustand befindlichen elektrischen Schaltung mit der Detektionseinrichtung (16) in Steuerverbindung steht, **dadurch gekennzeichnet, dass** zur Anpassung der Ausgangsimpedanz der Gleichrichterschaltung (8) an die Eingangsimpedanz der Detektionseinrichtung zwischen dem Ausgang der Gleichrichterschaltung (8) und der Detektionseinrichtung (16) ein für das Modulationssignal durchlässiges passives Filter (9) angeordnet ist, und dass die Filterstufe (7) und/oder das Filter (9) einen LC-Schwingkreis mit einem Schwingquarz (12) und/oder einem mikroakustischen Resonator aufweist.

2. Elektronisches Gerät (1) nach Anspruch 1, **dadurch gekennzeichnet, dass** das Filter (9) für ein Modulationssignal durchlässig ist, dessen Frequenz oder Frequenzbereich zwischen 10 kHz und 1,3 MHz liegt, insbesondere oberhalb von 30 kHz und bevorzugt oberhalb von 100 kHz.

3. Elektronisches Gerät (1) nach Anspruch 1 oder 2, **dadurch gekennzeichnet, dass** der LC-Schwingkreis eine Kapazität (13) aufweist, die mit dem Schwingquarz (12) und/oder dem mikroakustischen Resonator in einem Strompfad in Reihe geschaltet ist, der die UHF-Antenne (6) mit einem Anschluss für ein konstantes Potential verbindet, und dass der Schwingquarz (12) und/oder der mikroakustische Resonator und die Kapazität (13) mit einem Knoten (17) verbunden sind, der am Eingang der Gleichrichterschaltung (8) angeschlossen ist.

4. Elektronisches Gerät (1) nach einem der Ansprüche 1 bis 3, **dadurch gekennzeichnet, dass** der LC-Schwingkreis eine Kapazität (1 3) aufweist, die mit dem Schwingquarz (12) und/oder dem mikroakustischen Resonator in einem Strompfad in Reihe geschaltet ist, der den Ausgang der Gleichrichterschaltung (8) mit einem Anschluss für ein konstantes Potential verbindet, und dass der Schwingquarz (12) und/oder der mikroakustische Resonator und die Kapazität (1 3) mit einem Knoten (15) verbunden sind, an dem die Detektionseinrichtung (16) angeschlossen ist.

5. Elektronisches Gerät (1) nach einem der Ansprüche 1 bis 4, **dadurch gekennzeichnet, dass** der LC-Schwingkreis ein Serienschwingkreis ist, der in einem Strompfad angeordnet ist, der die UHF-Antenne (6) mit der passiven Gleichrichterschaltung (8) verbindet.

6. Elektronisches Gerät (1) nach Anspruch 5, **dadurch gekennzeichnet, dass** in dem die UHF-Antenne (6) mit der passiven Gleichrichterschaltung (8) verbinden Strompfad eine Schaltvorrichtung angeordnet ist, mittels welcher dieser Strompfad periodisch unterbrochen werden kann.

7. Elektronisches Gerät (1) nach einem der Ansprüche 1 bis 6, **dadurch gekennzeichnet, dass** das Modulationssignal ein Trägersignal aufweist, das mit einem Informationssignal moduliert ist, dass die Detektionseinrichtung (16) eine Demodulationseinrichtung zum Demodulieren des Informationssignals hat, dass die Detektionseinrichtung (16) eine Korrelationseinrichtung zum Vergleichen des Informationssignals mit einer vorbestimmten, dem elektronischen Gerät (1) zugeordneten Adresssignals aufweist, und dass die Korrelationseinrichtung derart mit der Betriebsartenumschalteinrichtung in Steuerverbindung steht, dass die elektrische Schaltung nur bei einer Übereinstimmung des Datensignals mit dem Adresssignal aufgeweckt wird.

8. Elektronisches Gerät (1) nach einem der Ansprüche 1 bis 7, **dadurch gekennzeichnet, dass** es als Funkknoten ausgestaltet ist, bei dem die elektrische Schaltung einen mit der UHF-Antenne verbundenen UHF-Transceiver aufweist.

9. Elektronisches Gerät (1) nach einem der Ansprüche 1 bis 8, **dadurch gekennzeichnet, dass** die elektrische Schaltung einen Mikrocomputer (2) aufweist.

10. Elektronisches Gerät (1) nach einem der Ansprüche 1 bis 9, **dadurch gekennzeichnet, dass** die UHF-Antenne (6) mittels einer Schalteinrichtung (18) wahl- oder wechselweise mit dem UHF-Transceiver (3) und der passiven Filterstufe (7) verbindbar ist, und dass die Schalteinrichtung (18) derart mit der Detektionseinrichtung (16) in Steuerverbindung steht, dass die UHF-Antenne (6) im Ruhezustand der elektrischen Schaltung mit der der passiven Filterstufe (7) und im Arbeitszustand mit dem UHF-Transceiver (3) verbunden ist.

## Claims

1. Electronic appliance (1) having an electrical circuit and an operating mode switching device which is associated with the latter and which can be used to wake the circuit from a quiescent state into an operating state in which the current draw of the circuit is greater than in the quiescent state, having a receiver for receiving a radio signal which has a UHF carrier which has been subjected to amplitude modulation with a modulation signal, wherein the receiver has a UHF antenna (6) which is connected to an input of a passive rectifier circuit (8) via a passive filter stage (7), wherein an output of the rectifier circuit (8) is connected to a detection device (16) for the modulation signal, and wherein the operating mode switching device has a control connection to the detection device (16) for the purpose of waking the electrical circuit which is in the quiescent state, **characterized in that** for the purpose of matching the output impedance of the rectifier circuit (8) to the input impedance of the detection device the output of the rectifier circuit (8) and the detection device (16) have a passive filter (9) arranged between them which passes the modulation signal, and **in that** the filter stage (7) and/or the filter (9) has/have an LC resonant circuit having a quartz oscillator (12) and/or a microacoustic resonator.

2. Electronic appliance (1) according to Claim 1, **characterized in that** the filter (9) passes a modulation signal, the frequency or frequency range of which is between 10 kHz and 1.3 MHz, particularly above 30 kHz and preferably above 100 kHz.

3. Electronic appliance (1) according to Claim 1 or 2, **characterized in that** the LC resonant circuit has a capacitance (13) which is connected in series with the quartz oscillator (12) and/or the microacoustic resonator in a current path which connects the UHF antenna (6) to a connection for a constant potential, and **in that** the quartz oscillator (12) and/or the microacoustic resonator and the capacitance (13) are connected to a node (17) which is connected to the input of the rectifier circuit (8).

4. Electronic appliance (1) according to one of Claims 1 to 3, **characterized in that** the LC resonant circuit has a capacitance (13) which is connected in series with the quartz oscillator (12) and/or the microacoustic resonator in a current path which connects the output of the rectifier circuit (8) to a connection for a constant potential, and **in that** the quartz oscillator (12) and/or the microacoustic resonator and the capacitance (13) are connected to a node (15) to which the detection device (16) is connected.

5. Electronic appliance (1) according to one of Claims 1 to 4, **characterized in that** the LC resonant circuit is a series resonant circuit which is arranged in a current path which connects the UHF antenna (6) to the passive rectifier circuit (8).

6. Electronic appliance (1) according to Claim 5, **characterized in that** the current path which connects the UHF antenna (6) to the passive rectifier circuit (8) contains a switching apparatus which can be used to periodically interrupt this current path.

7. Electronic appliance (1) according to one of Claims 1 to 6, **characterized in that** the modulation signal has a carrier signal which is modulated with an information signal, **in that** the detection device (16) has a demodulation device for demodulating the information signal, **in that** the detection device (16) has a correlation device for comparing the information signal with a predetermined address signal that is associated with the electronic appliance (1), and **in that** the correlation device has a control connection to the operating mode switching device such that the electrical circuit is woken only when the data signal matches the address signal.

8. Electronic appliance (1) according to one of Claims 1 to 7, **characterized in that** it is in the form of a radio node in which the electrical circuit has a UHF transceiver that is connected to the UHF antenna.

9. Electronic appliance (1) according to one of Claims 1 to 8, **characterized in that** the electrical circuit has a microcomputer (2).

10. Electronic appliance (1) according to one of Claims 1 to 9, **characterized in that** the UHF antenna (6) can be selectively or alternately connected to the UHF transceiver (3) and the passive filter stage (7) by means of a switching device (18), and **in that** the switching device (18) has a control connection to the detection device (16) such that the UHF antenna (6) is connected to the passive filter stage (7) in the quiescent state of the electrical circuit and to the UHF transceiver (3) in the operating state.

## Revendications

1. Appareil électronique (1) comprenant un circuit électrique et un dispositif d'inversion de mode de fonctionnement associé à celui-ci, au moyen duquel le circuit peut être activé d'un état de repos à un état de travail dans lequel le courant consommé du circuit est plus élevé que dans l'état de repos, comprenant un récepteur pour recevoir un signal radioélectrique qui présente une porteuse UHF, laquelle est modulée en amplitude avec un signal de modulation, le récepteur possédant une antenne UHF (6) qui est reliée par le biais d'un étage de filtrage passif (7) avec une entrée d'un circuit redresseur passif (8), une sortie du circuit redresseur (8) étant reliée avec un dispositif de détection (16) pour le signal de modulation, et le dispositif d'inversion de mode de fonctionnement se trouvant en liaison de commande avec le dispositif de détection (16) pour activer le circuit électrique qui se trouve à l'état de repos, **caractérisé en ce que** pour adapter l'impédance de sortie du circuit redresseur (8) à l'impédance d'entrée du dispositif de détection, un filtre passif (9) laissant passer le signal de modulation est disposé entre la sortie du circuit redresseur (8) et le dispositif de détection (16), et **en ce que** l'étage de filtrage (7) et/ou le filtre (9) présentent un circuit oscillant LC muni d'un quartz d'oscillation (12) et/ou d'un microrésonateur acoustique.

2. Appareil électronique (1) selon la revendication 1, **caractérisé en ce que** le filtre (9) laisse passer un signal de modulation dont la fréquence ou la plage de fréquences est comprise entre 10 kHz et 1,3 MHz, notamment au-dessus de 30 kHz et de préférence au-dessus de 100 kHz.

3. Appareil électronique (1) selon la revendication 1 ou 2, **caractérisé en ce que** le circuit oscillant LC présente un condensateur (13) qui est branché en série avec le quartz d'oscillation (12) et/ou le microrésonateur acoustique dans une branche de courant, laquelle relie l'antenne UHF (6) avec une borne pour un potentiel constant, et **en ce que** le quartz d'oscillation (12) et/ou le microrésonateur acoustique et le condensateur (13) sont reliés avec un noeud (17) qui est raccordé à l'entrée du circuit redresseur (8).

4. Appareil électronique (1) selon l'une des revendications 1 à 3, **caractérisé en ce que** le circuit oscillant LC présente un condensateur (13) qui est branché en série avec le quartz d'oscillation (12) et/ou le microrésonateur acoustique dans une branche de courant, laquelle relie la sortie du circuit redresseur (8) avec une borne pour un potentiel constant, et **en ce que** le quartz d'oscillation (12) et/ou le microrésonateur acoustique et le condensateur (13) sont reliés avec un noeud (15) auquel est raccordé le dispositif de détection (16).

5. Appareil électronique (1) selon l'une des revendications 1 à 4, **caractérisé en ce que** le circuit oscillant LC est un circuit oscillant série qui est disposé dans une branche de courant qui relie l'antenne UHF (6) avec le circuit redresseur passif (8).

6. Appareil électronique (1) selon la revendication 5, **caractérisé en ce que** dans la branche de courant qui relie l'antenne UHF (6) avec le circuit redresseur passif (8) est disposé un dispositif de commutation au moyen duquel cette branche de courant peut être interrompue périodiquement.

7. Appareil électronique (1) selon l'une des revendications 1 à 6, **caractérisé en ce que** le signal de modulation présente un signal porteur qui est modulé avec un signal d'information, **en ce que** le dispositif de détection (16) dispose d'un dispositif de démodulation pour démoduler le signal d'information, **en ce que** le dispositif de détection (16) présente un dispositif de corrélation pour comparer le signal d'information avec un signal d'adresse prédéfini associé à l'appareil électronique (1), et **en ce que** le dispositif de corrélation est en liaison de commande avec le dispositif d'inversion de mode de fonctionnement de telle sorte que le circuit électrique n'est activé qu'en cas de concordance du signal de données avec le signal d'adresse.

8. Appareil électronique (1) selon l'une des revendications 1 à 7, **caractérisé en ce qu'**il est configuré sous la forme d'un noeud radioélectrique avec lequel le circuit électrique présente un émetteur/récepteur UHF relié avec l'antenne UHF.

9. Appareil électronique (1) selon l'une des revendications 1 à 8, **caractérisé en ce que** le circuit électrique présente un microordinateur (2).

10. Appareil électronique (1) selon l'une des revendications 1 à 9, **caractérisé en ce que** l'antenne UHF (6) peut être reliée au choix ou en alternance avec l'émetteur/récepteur UHF (3) et l'étage de filtrage passif (7) au moyen d'un dispositif de commutation (18), et **en ce que** le dispositif de commutation (18) est en liaison de commande avec le dispositif de détection (16) de telle sorte que l'antenne UHF (6), lorsque le circuit électrique se trouve à l'état de repos, est reliée avec l'étage de filtrage passif (7) et, à l'état de travail, avec l'émetteur/récepteur UHF (3).
